# EUROPEAN PATENT SPECIFICATION

(11) **EP 3 699 007 B1**
(45) Date of publication and mention of the grant of the patent: **13.09.2023**
(21) Application number: 18867578.9
(22) Date of filing: 11.10.2018
(51) Int. Cl.: B60J 7/16, B60H 1/24, B60J 7/043, B60H 1/26

(54) **VEHICLE SUNROOF SYSTEM, VEHICLE HAVING SAME, AND VEHICLE CONTROL METHOD**
SCHIEBEDACHSYSTEM FÜR FAHRZEUGE, FAHRZEUG DAMIT UND FAHRZEUGSTEUERUNGSVERFAHREN
TOIT PARE-SOLEIL DE VÉHICULE, VÉHICULE ÉQUIPÉ DUDIT TOIT, ET PROCÉDÉ DE COMMANDE DE VÉHICULE

(30) Priority: 17.10.2017 CN 201710965906
(43) Date of publication of application: 26.08.2020
(73) Proprietor: NIO (Anhui) Holding Co., Ltd., Hefei City, Anhui Province (CN)
(72) Inventor: CHEN, Liang, Anting, Jiading Shanghai (CN)
(74) Representative: Vossius & Partner Patentanwälte Rechtsanwälte mbB
(86) International application number: PCT/CN2018/109748
(87) International publication number: WO 2019/076224

(56) References cited:
- EP-A2- 0 491 158
- EP-A2- 0 491 158
- CN-A- 101 879 853
- CN-A- 106 707 897
- CN-A- 106 707 897
- CN-U- 203 142 356
- CN-U- 208 247 942
- DE-C- 823 409
- US-A1- 2013 268 163

## Description

### FIELD OF THE INVENTION

The invention relates to the field of vehicle ventilation. More specifically, it relates to a vehicle sunroof system.

### BACKGROUND OF THE INVENTION

One of the important directions of the car development is comfort, greenness and energy conservation and environmental protection of the completed built vehicle. At present, traditional vehicles employ a ventilation way of an in-car air conditioning system or rolling open the side window and sunroof of a vehicle so as to introduce fresh air. For the former, it cannot directly obtain the introduction of fresh air, and the filtered low dust air cannot be completely filtered to be clean. Furthermore, for an increasingly popular electric vehicle system, it is more dependent on the battery level of the completed built vehicle, when the battery level of the vehicle is low, it is often necessary to turn off all of the air conditioning systems to ensure the normal traveling of the vehicle, which would greatly affect the comfort of user. For the latter, since the front and rear sides of the vehicle are located on the same cambered surface, very good air inlet and air outlet flow paths are difficult to obtain, and the vehicle sunroof further realizes inlet and outlet at the same opening. Thus, opening the aforementioned window would result in flow turbulence of the fresh air into the vehicle and is insufficient to provide a comfortable experience for the user. Therefore, it is a technical problem demanding prompt solution of how to introduce active fresh air and provide natural ventilation refrigeration for the interior space of the vehicle, and to support external circulation ventilation of the member cabin and conduct ventilation and refrigeration of the first row of members in the vehicle.

### SUMMARY OF THE INVENTION

The purpose of the present invention is to provide a vehicle sunroof system capable of adjusting ventilation comfort in a vehicle.

Another object of the present invention is to provide a vehicle with a vehicle sunroof system capable of adjusting ventilation comfort in a vehicle.

Yet another object of the present invention is to provide a vehicle control method for adjusting ventilation comfort in a vehicle.

To achieve the object of the present invention, according to one aspect of the present invention, there is provided a vehicle sunroof system according to claim 1.

Optionally, the air inlet sunroof and/or the air outlet sunroof pivot relative to the car roof.

Optionally, a windward pivoting angle between the air inlet sunroof and the car roof increases when a detected air inlet amount is smaller than a set air inlet amount; and/or a leeward pivoting angle between the air outlet sunroof and the car roof decreases when a detected air inlet speed is smaller than a set air inlet speed.

According to the invention, the air inlet sunroof is linked with the air outlet sunroof; wherein during the process when the air inlet sunroof moves from the air inlet closed position to the air inlet open position, the air outlet sunroof moves from the air outlet closed position to the air outlet open position.

According to another aspect of the present invention, there is also provided a vehicle comprising: the vehicle sunroof system as described above; and a controller for controlling the movement of the air inlet sunroof and/or the air outlet sunroof.

Optionally, the vehicle further comprises: an air inlet sensor for detecting the air inlet speed and/or the air inlet amount; and the controller controls the opening and closing and pivoting angles of the air inlet sunroof and/or the air outlet sunroof based on the detected air inlet speed and/or the air inlet amount.

Optionally, the vehicle further comprises an air quality sensor for detecting air quality parameters; and the controller controls the opening and closing and pivoting angles of the air inlet sunroof and/or the air outlet sunroof based on the detected air quality parameters.

Optionally, the vehicle further comprises: a guide air duct disposed downstream of the air inlet sunroof for directing the inlet air into a designated location within the vehicle.

Optionally, the vehicle further comprises: an air guiding blade disposed at an outlet of the guide air duct for adjusting an air inlet direction.

Optionally, the air inlet sunroof is located longitudinally along the vehicle at a front side of a first row of seats of the vehicle.

According to yet another aspect of the present invention, there is also provided a vehicle control method for the vehicle as described above, the method comprising: an air guiding step S100, wherein the air inlet sunroof moves from the air inlet closed position to the air inlet open position, and the air outlet sunroof moves from the air outlet closed position to the air outlet open position; a closing step S200, wherein the air inlet sunroof moves from the air inlet open position to the air inlet closed position, and the air outlet sunroof moves from the air outlet open position to the air outlet closed position.

Optionally, the air guiding step S100 further comprises: an air amount adjusting mode S110, wherein when a detected air inlet amount is smaller than a set air inlet amount, the windward pivoting angle between the air inlet sunroof and the car roof increases; while when the detected air inlet amount is greater than the set air inlet amount, the windward pivoting angle between the air inlet sunroof and the car roof decreases; and/or an air speed adjusting mode S120, wherein when a detected air inlet speed is smaller than a set air inlet speed, the leeward pivoting angle between the air outlet sunroof and the car roof decreases; while when the detected air inlet speed is greater than the set air inlet speed, the leeward pivoting angle between the air outlet sunroof and the car roof increases.

Optionally, the air guiding step S100 further comprises: an air quality adjusting mode S130: when a detected air quality parameter is smaller than a set air quality parameter, the windward pivoting angle between the air inlet sunroof and the car roof reduces or moves to the air inlet closed position; and the leeward pivoting angle between the air outlet sunroof and the car roof reduces or moves to an air outlet closed position; when the detected air quality parameter is greater than the set air quality parameter, the windward pivoting angle between the air inlet sunroof and the car roof increases or moves to the air inlet open position; and the leeward pivoting angle between the air outlet sunroof and the car roof increases or moves to the air outlet open position.

The vehicle sunroof system according to the present invention, through the setting and cooperation of the air inlet sunroof and the air outlet sunroof, not only enables fresh air adjusting in the vehicle, but may also adjusts the air inlet condition to meet the user demands in different situations, greatly improving the user comfort.

### BRIEF DESCRIPTION OF THE DRAWINGS

FIG. 1 is a schematic view of one embodiment of a vehicle of the present invention, wherein the air inlet sunroof is in an air inlet closed position and the air outlet sunroof is in an air outlet closed position.
FIG. 2 is a cross-sectional schematic view of the vehicle in FIG. 1.
FIG. 3 is another schematic view of the vehicle in FIG. 1 with the air inlet sunroof in an air inlet open position and the air outlet sunroof in an air outlet open position.
FIG. 4 is a cross-sectional schematic view of the vehicle in FIG. 3.

### DETAILED DESCRIPTION OF THE EMBODIMENT(S) OF THE INVENTION

In accordance with the concepts of the present invention, embodiments of a vehicle sunroof system and a vehicle with the same are provided herein in connection with the figures. For ease of description, oriental terms such as "front", "back", "windward side", "leeward side" and the like referred to hereinafter all take the vehicle as a reference basis, i.e., when the vehicle is in a normal state of moving forward, its head side represents the front side and the windward side, and the tail side represents the rear side and the leeward side.

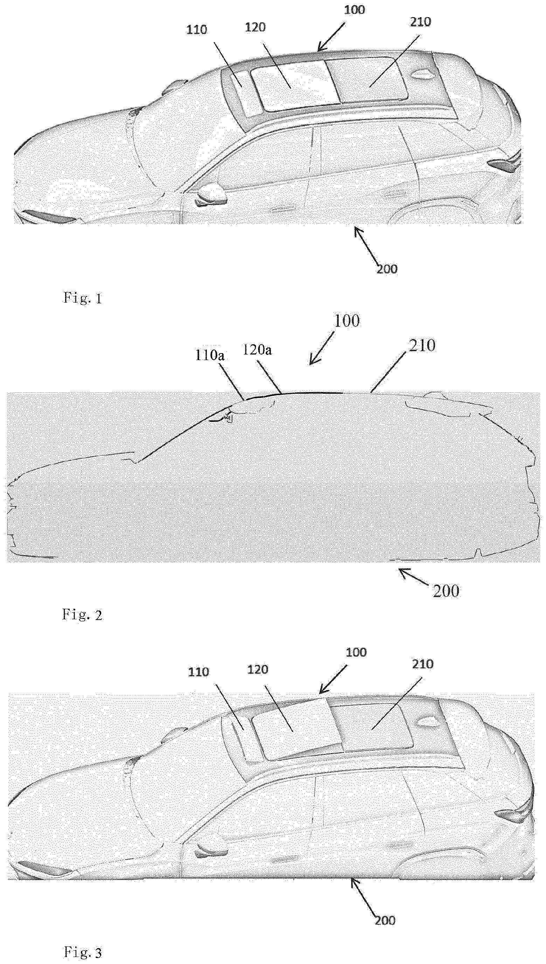

Referring to FIGS. 1-4, an embodiment of a vehicle having a vehicle sunroof system of the present concept is shown. Further, it should also be known that while the vehicle is described as an embodiment herein, the vehicle sunroof system may also be manufactured or sold as a separate product unit, and should likewise be incorporated into the protective scope of the present concept.

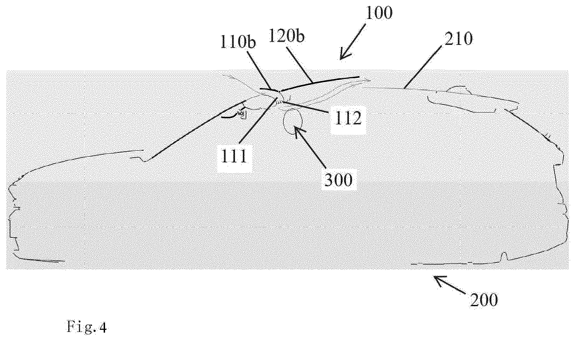

Specifically, the vehicle 200 in the figures includes a vehicle sunroof system 100 disposed at a car roof 210. The vehicle sunroof system 100 includes an air inlet sunroof 110 and an air outlet sunroof 120 disposed in series at the car roof 210. Wherein, the air outlet sunroof 120 is located at the rear side of the air inlet sunroof 110 in the direction from the head to the tail of the vehicle 200. Both types of sunroofs can both be opened and closed to provide an air inlet opening and an air outlet opening, respectively, and to enable the two to form a smooth wind path. Specifically, the air inlet sunroof 110 has an air inlet open position 110b (see FIG. 4) towards the windward side opening and an air inlet closed position 110a that is closed with respect to the car roof 210, and the air inlet sunroof 110 is movable between the air inlet open position 110b and the air inlet closed position 110a; while the air outlet sunroof 120 has an air outlet open position 120b (see FIG. 4) towards the leeward side opening and an air outlet closed position 120a that is closed with respect to the car roof 210, and the air outlet sunroof 120 is movable between the air outlet open position 120b and the air outlet closed position 120a. In such arrangement, the air inlet sunroof and the air outlet sunroof may be opened and closed according to the needs of the user, or the opening and closing extent of the two may be partly adjusted, an appropriate air inlet amount and air inlet speed may be provided through cooperation to meet the user demands in different situations, greatly improving the user comfort.

As a specific example of the form of motion of the sunroof, the air inlet sunroof 110 and/or the air outlet sunroof 120 can move pivotally relative to the car roof 210. At this time, whether the air inlet sunroof 110 and the air outlet sunroof 120 are open or closed and the opening and closing extent of the two may, respectively, be adjusted by the pivoting angle formed by the air inlet sunroof 110 and the air outlet sunroof 120 respectively, with the car roof. Specifically, when the air inlet sunroof 110 pivots to be open relative to the car roof 210, the windward pivoting angle between the air inlet sunroof 110 and the car roof 210 increases as the set air inlet amount increases, where the windward pivoting angle can also characterize the opening degree of the air inlet sunroof, the larger the windward pivoting angle, the larger the air inlet opening degree; and/or the leeward pivoting angle between the air outlet sunroof 120 and the car roof 210 decreases as the set air inlet speed increases, where the leeward pivoting angle between the air outlet sunroof 120 and the car roof 210 also characterizes the opening degree of the air outlet sunroof 120, and the larger the leeward pivoting angle, the larger the opening degree.

Of course, in addition to this, although not shown in the drawings, the air inlet sunroof and the air outlet sunroof may further employ mechanisms of a sliding form to control the opening and closing or to adjust the opening and closing extent. Due to the fact that the sunroof of the sliding form has a relatively mature structure, it is easy to think of, under the teachings of the present invention, combining the sunroof of the sliding form in the air inlet sunroof and the air outlet sunroof of the present invention so that the purpose of simultaneously coordinating the inlet and outlet air is achieved, which, therefore, is not described in detail herein.

Further, according to the invention, the air inlet sunroof 110 and the air outlet sunroof 120 may be disposed in a linked form for simplified control. Specifically, in one linked mode, when the air inlet sunroof 110 moves from the air inlet closed position 110a to the air inlet open position 110b, the air outlet sunroof 120 moves from the air outlet closed position 120a to the air outlet open position 120b.

While the foregoing embodiments are described in more detail with respect to one air inlet sunroof and one air outlet sunroof, the present invention is actually intended to dispose two types of sunroofs, one for providing an air inlet opening, and one for providing an air outlet opening. For the specific number of both, no limitation is necessary. For example, in another embodiment, there may be two air inlet sunroofs and two air outlet sunroofs; and also, the specific number of the two does not need to correspond with each other. For example, in yet another embodiment, there may be two air inlet sunroofs and one air outlet sunroof.

In order to further optimize the vehicle sunroof system, part of auxiliary components and parts may also be additionally disposed or the disposing position thereof may be adjusted, so that a better technical effect is expected to be achieved.

For example, a guide air duct 111 may also be disposed downstream of the air inlet sunroof 110, under the assistance of which a fresh air entering the vehicle can be accurately introduced into a designated location within the vehicle. For example, the fresh air can be introduced to a first row of passengers 300 within the vehicle, thereby effectively improving the user comfort. On this basis, as a further modification, an air guiding blade 112 may also be disposed at the outlet of the guide air duct 111 for wind direction trimming of the fresh air flowing into the vehicle, so that it provides comfort fresh air for multiple points within a certain range. For example, blowing the fresh air to the head or chest of the first row of passengers 300 enables a more accurate air guiding.

Further, optionally, to provide the overall comfort for the passenger in the vehicle, the air inlet sunroof 110 is positioned at the up-front of the first row of seats of the vehicle 200, and specifically, the position for the air inlet sunroof 110 to be disposed at the car roof 210 is the up-front of the first row of seats along the longitudinal direction of the vehicle 200. At this time, the fresh air enters the vehicle via the front side of the first row of passengers 300, flows through the first row of passengers, flows backwards through a second row of passengers and flow out of the vehicle via the air outlet sunroof 120 to enable the overall fresh air circulation. In this example, the air outlet sunroof 120 is longitudinally disposed along the vehicle 200 at the car roof 210 at the up-rear of the second row of seats of the vehicle 200. Of course, to provide comfort for the rear row of passengers, the air inlet sunroof 110 may also be located longitudinally along the vehicle 200 between the first row of seats and the second row of seats of the vehicle 200, but at this point additional consideration of the design position of the air outlet sunroof is required.

For the vehicle sunroof system, the technical effect of providing and adjusting a fresh air circulation may be achieved through autonomous adjustment by passengers, and the foregoing effect may also be achieved through automatic control. When automatic control is employed, the vehicle sunroof system itself or the vehicle using the vehicle sunroof system itself should also be equipped with a corresponding controller and sensor, as will be described as examples below.

In one embodiment, the illustrated vehicle 200 also includes a controller for controlling the motion of the air inlet sunroof 110 and/or the air outlet sunroof 120, which may enable control based on several kinds of sensor detection results. For example, the vehicle also includes an air inlet sensor for detecting the air inlet speed and/or the air inlet amount; at this point, the controller controls the opening and closing and the pivoting angles of the air inlet sunroof 110 and/or the air outlet sunroof 120 based on the detected air inlet speed and/or the air inlet amount. In another example, the vehicle also includes an air quality sensor for detecting air quality parameters; at this time, the controller controls the opening and closing and the pivoting angles of the air inlet sunroof 110 and/or the air outlet sunroof 120 based on the detected air quality parameters.

Meanwhile, there is also provided an embodiment of the vehicle control method which may be used for the foregoing vehicle with the controller and the corresponding sensor. The method comprises an air guiding step 5100, wherein an air inlet sunroof moves from an air inlet closed position to an air inlet open position, and an air outlet sunroof moves from an air outlet closed position to an air outlet open position; at this time, fresh air is able to flow in from the air inlet sunroof, blow through the passengers within the vehicle, and then flow out via the air outlet sunroof to enable the fresh air circulation. The method further comprises a closing step S200, wherein the air inlet sunroof moves from the air inlet open position to the air inlet closed position, and the air outlet sunroof moves from the air outlet open position to the air outlet closed position, at this time, the way of the fresh air circulation is disabled under control based on the actual situation.

As a finer control, the air guiding step S100 further comprises an air amount adjusting mode S110, and when the detected air inlet amount is smaller than the set air inlet amount, the windward pivoting angle between the air inlet sunroof and the car roof increases; while when the detected air inlet amount is greater than the set air inlet amount, the windward pivoting angle between the air inlet sunroof and the car roof decreases; at this time, the sunroof action will be controlled based on the set air inlet amount through self-help setting by the user or the default setting of the vehicle so that the amount of fresh air blown in satisfies the expectation.

The air guiding step S100 further comprises an air speed adjusting mode S120, wherein when the detected air inlet speed is smaller than the set air inlet speed, the leeward pivoting angle between the air outlet sunroof and the car roof decreases; while when the detected air inlet speed is greater than the set air inlet speed, the leeward pivoting angle between the air outlet sunroof and the car roof increases; at this time, the sunroof action will be controlled based on the set air inlet speed through self-help setting by the user or the default setting of the vehicle so that the speed of fresh air blown in satisfies the expectation.

The air guiding step S100 further comprises an air quality adjusting mode S130: when the detected air quality parameter is smaller than the set air quality parameter, the windward pivoting angle between the air inlet sunroof and the car roof reduces or moves to the air inlet closed position; and the leeward pivoting angle between the air outlet sunroof and the car roof reduces or moves to an air outlet closed position; when the detected air quality parameter is greater than the set air quality parameter, the windward pivoting angle between the air inlet sunroof and the car roof increases or moves to the air inlet open position; and the leeward pivoting angle between the air outlet sunroof and the car roof increases or moves to the air outlet open position. At this time, the sunroof action will be controlled based on the set air quality parameter through self-help setting by the user or the default setting of the vehicle so that the demand of the user for the fresh air and the air quality is considered, such that on the premise that the air quality can be accepted by the user, the sunroof is opened as much as possible to provide a fresh air or to increase the fresh air supply; while on the premise that the air quality cannot be accepted by the user, the sunroof is closed as much as possible to stop providing fresh air or to decrease the fresh air supply.

The above examples mainly illustrate a vehicle sunroof system, a vehicle with the same and a vehicle control method. While only some of the embodiments of the present invention have been described, it will be appreciated by those of ordinary skill in the art that the present invention may be implemented in many other forms without departing from the subject-matter as claimed in the appended claims.

## Claims

1. A vehicle sunroof system (100), which comprises:
an air inlet sunroof (110) disposed at a car roof (210); and
an air outlet sunroof (120) disposed in series at a rear side of the air inlet sunroof (110) along the car roof (210),
wherein the air inlet sunroof (110) has an air inlet open position (110b) towards a windward side opening and an air inlet closed position (110a) that is closed relative to the car roof (210), and the air inlet sunroof (110) is movable between the air inlet open position (110b) and the air inlet closed position (110a); while the air outlet sunroof (120) has an air outlet open position (120b) towards a leeward side opening and an air outlet closed position (120a) which is closed relative to the car roof (210), and the air outlet sunroof (120) is movable between the air outlet open position (120b) and the air outlet closed position (120a), the air inlet sunroof (110) is linked with the air outlet sunroof (120); wherein during the process when the air inlet sunroof (110) moves from the air inlet closed position (110a) to the air inlet open position (110b), the air outlet sunroof (120) moves from the air outlet closed position (120a) to the air outlet open position (120b), **characterized in that** the air outlet sunroof (120) and the air inlet sunroof (110) are adjacent to each other.

2. The vehicle sunroof system (100) of claim 1, **characterized in that** the air inlet sunroof (110) and/or the air outlet sunroof (120) pivot relative to the car roof (210).

3. The vehicle sunroof system (100) of claim 2, **characterized in that** a windward pivoting angle between the air inlet sunroof (110) and the car roof (210) increases when a detected air inlet amount is smaller than a set air inlet amount; and/or a leeward pivoting angle between the air outlet sunroof (120) and the car roof (210) decreases when a detected air inlet speed is smaller than a set air inlet speed.

4. A vehicle (200), **characterized in that** it comprises: the vehicle sunroof system (100) of any of claims 1 to 3; and a controller for controlling the movement of the air inlet sunroof (110) and/or the air outlet sunroof (120).

5. The vehicle (200) of claim 4, **characterized in that** it further comprises: an air inlet sensor for detecting the air inlet speed and/or the air inlet amount; and the controller controls the opening and closing and pivoting angles of the air inlet sunroof (110) and/or the air outlet sunroof (120) based on the detected air inlet speed and/or the air inlet amount.

6. The vehicle (200) of claim 4, **characterized in that** it further comprises an air quality sensor for detecting air quality parameters; and the controller controls the opening and closing and pivoting angles of the air inlet sunroof (110) and/or the air outlet sunroof (120) based on the detected air quality parameters.

7. The vehicle (200) of claim 4, **characterized in that** it further comprises: a guide air duct (111) disposed downstream of the air inlet sunroof (110) for directing the inlet air into a designated location within the vehicle (200).

8. The vehicle (200) of claim 7, **characterized in that** it further comprises: an air guiding blade (112) disposed at an outlet of the guide air duct (111) for adjusting an air inlet direction.

9. The vehicle (200) of claim 4, **characterized in that** the air inlet sunroof (110) is located longitudinally along the vehicle (200) at a front side of a first row of seats of the vehicle (200).

10. A vehicle control method for the vehicle (200) of any of claims 4 to 9, **characterized in that** the method comprises:
an air guiding step S100, wherein the air inlet sunroof (110) moves from the air inlet closed position (110a) to the air inlet open position (110b), and the air outlet sunroof (120) moves from the air outlet closed position (120a) to the air outlet open position (120b);
a closing step S200, wherein the air inlet sunroof (110) moves from the air inlet open position (110b) to the air inlet closed position (110a), and the air outlet sunroof (120) moves from the air outlet open position (120b) to the air outlet closed position (120a).

11. The vehicle control method of claim 10, **characterized in that** the air guiding step S100 further comprises:
S110, wherein when a detected air inlet amount is smaller than a set air inlet amount, the windward pivoting angle between the air inlet sunroof (110) and the car roof (210) increases; while when the detected air inlet amount is greater than the set air inlet amount, the windward pivoting angle between the air inlet sunroof (110) and the car roof (210) decreases; and/or
S120, wherein when a detected air inlet speed is smaller than a set air inlet speed, the leeward pivoting angle between the air outlet sunroof (120) and the car roof (210) decreases; while when the detected air inlet speed is greater than the set air inlet speed, the leeward pivoting angle between the air outlet sunroof (120) and the car roof (210) increases.

12. The vehicle control method of claim 10, **characterized in that** the air guiding step S100 further comprises:
when a detected air quality parameter is smaller than a set air quality parameter, the windward pivoting angle between the air inlet sunroof (110) and the car roof (210) reduces or moves to the air inlet closed position (110a); and the leeward pivoting angle between the air outlet sunroof (120) and the car roof (210) reduces or moves to the air outlet closed position (120a);
when the detected air quality parameter is greater than the set air quality parameter, the windward pivoting angle between the air inlet sunroof (110) and the car roof (210) increases or moves to the air inlet open position (110b); and the leeward pivoting angle between the air outlet sunroof (120) and the car roof (210) increases or moves to the air outlet open position (120b).

## Patentansprüche

1. Sonnendachsystem für Fahrzeuge (100), das Folgendes aufweist:
ein Lufteinlasssonnendach (110), angeordnet an einem Fahrzeugdach (210); und
ein Luftauslasssonnendach (120), angeordnet in Reihen an einer Rückseite des Lufteinlasssonnendachs (110) entlang des Fahrzeugdachs (210),
wobei das Lufteinlasssonnendach (110) eine offene Lufteinlassposition (110b) in Richtung einer Öffnung auf der windzugewandten Seite und eine geschlossene Lufteinlassposition (110a), die bezüglich des Fahrzeugdachs (210) geschlossen ist, aufweist, und wobei das Lufteinlasssonnendach (110) zwischen der offenen Lufteinlassposition (110b) und der geschlossenen Lufteinlassposition (110a) bewegbar ist; während das Luftauslasssonnendach (120) eine offene Luftauslassposition (120b) in Richtung einer Öffnung auf der windabgewandten Seite und eine geschlossene Luftauslassposition (120a), die bezüglich des Fahrzeugdachs (210) geschlossen ist, aufweist und das Luftauslasssonnendach (120) zwischen der offenen Luftauslassposition (120b) und der geschlossenen Luftauslassposition (120a) bewegbar ist, wobei das Lufteinlasssonnendach (110) mit dem Luftauslasssonnendach (120) verbunden ist; wobei während des Prozesses, wenn sich das Lufteinlasssonnendach (110) von der geschlossen Lufteinlassposition (110a) in die offene Lufteinlassposition (110b) bewegt, sich das Luftauslasssonnendach (120) von der geschlossenen Luftauslassposition (120a) in die offene Luftauslassposition (120b) bewegt, **dadurch gekennzeichnet, dass** das Luftauslasssonnendach (120) und das Lufteinlasssonnendach (110) aneinander angrenzend sind.

2. Sonnendachsystem für Fahrzeuge (100) nach Anspruch 1, **dadurch gekennzeichnet, dass** das Lufteinlasssonnendach (110) und/oder das Luftauslasssonnendach (120) bezüglich des Fahrzeugdachs (210) schwenken.

3. Sonnendachsystem für Fahrzeuge (100) nach Anspruch 2, **dadurch gekennzeichnet, dass** sich ein windzugewandter Schwenkwinkel zwischen dem Lufteinlasssonnendach (110) und dem Fahrzeugdach (210) vergrößert, wenn eine detektierte Lufteinlassmenge kleiner ist als eine festgelegte Lufteinlassmenge; und/oder sich ein windabgewandter Schwenkwinkel zwischen dem Luftauslasssonnendach (120) und dem Fahrzeugdach (210) verringert, wenn eine detektierte Lufteinlassgeschwindigkeit kleiner als eine festgelegte Lufteinlassgeschwindigkeit ist.

4. Fahrzeug (200), **dadurch gekennzeichnet, dass** es Folgendes aufweist: das Sonnendachsystem für Fahrzeuge (100) nach einem der Ansprüche 1 bis 3; und eine Steuerung zum Steuern der Bewegung des Lufteinlasssonnendachs (110) und/oder des Luftauslasssonnendachs (120).

5. Fahrzeug (200) nach Anspruch 4, **dadurch gekennzeichnet, dass** es ferner Folgendes aufweist: einen Lufteinlasssensor zum Detektieren der Lufteinlassgeschwindigkeit und/oder der Lufteinlassmenge; und wobei die Steuerung das Öffnen und Schließen und die Schwenkwinkel des Lufteinlasssonnendachs (110) und/oder des Luftauslasssonnendachs (120) basierend auf der detektierten Lufteinlassgeschwindigkeit und/oder der Lufteinlassmenge steuert.

6. Fahrzeug (200) nach Anspruch 4, **dadurch gekennzeichnet, dass** es ferner einen Luftqualitätssensor zum Detektieren von Luftqualitätsparametern aufweist; und wobei die Steuerung das Öffnen und Schließen und die Schwenkwinkel des Lufteinlasssonnendachs (110) und/oder des Luftauslasssonnendachs (120) basierend auf den detektierten Luftqualitätsparametern steuert.

7. Fahrzeug (200) nach Anspruch 4, **dadurch gekennzeichnet, dass** es ferner Folgendes aufweist: einen Luftführungskanal (111), angeordnet stromabwärts des Lufteinlasssonnendachs (110) zum Leiten der Einlassluft zu einem bezeichneten Ort im Fahrzeug (200).

8. Fahrzeug (200) nach Anspruch 7, **dadurch gekennzeichnet, dass** es ferner Folgendes aufweist: ein Luftführungsblatt (112), angeordnet an einem Auslass des Luftführungskanals (111) zum Anpassen einer Lufteinlassrichtung.

9. Fahrzeug (200) nach Anspruch 4, **dadurch gekennzeichnet, dass** das Lufteinlasssonnendach (110) längs entlang des Fahrzeugs (200) an einer Vorderseite einer ersten Reihe von Sitzen des Fahrzeugs (200) befindlich ist.

10. Fahrzeugsteuerverfahren für das Fahrzeug (200) nach einem der Ansprüche 4 bis 9, **dadurch gekennzeichnet, dass** das Verfahren Folgendesaufweist:
einen Luftführungsschritt S100, bei dem sich das Lufteinlasssonnendach (110) von der geschlossenen Lufteinlassposition (110a) in die offene Lufteinlassposition (110b) bewegt und bei dem sich das Luftauslasssonnendach (120) von der geschlossenen Luftauslassposition (120a) in die offene Luftauslassposition (120b) bewegt;
einen Schließschritt S200, bei dem sich das Lufteinlasssonnendach (110) von der offenen Lufteinlassposition (110b) in die geschlossene Lufteinlassposition (110a) bewegt und bei dem sich das Luftauslasssonnendach (120) von der offenen Luftauslassposition (120b) in die geschlossene Luftauslassposition (120a) bewegt;

11. Fahrzeugsteuerverfahren nach Anspruch 10, **dadurch gekennzeichnet, dass** der Luftführungsschritt S100 ferner Folgendes aufweist:
S110, wobei, wenn eine detektierte Lufteinlassmenge kleiner als eine festgelegte Lufteinlassmenge ist, sich der windzugewandte Schwenkwinkel zwischen dem Lufteinlasssonnendach (110) und dem Fahrzeugdach (210) vergrößert; während, wenn die detektierte Lufteinlassmenge größer als die festgelegte Lufteinlassmenge ist, sich der windzugewandte Schwenkwinkel zwischen dem Lufteinlasssonnendach (110) und dem Fahrzeugdach (210) verringert; und/oder
S120, wobei, wenn eine detektierte Lufteinlassgeschwindigkeit kleiner als eine festgelegte Lufteinlassgeschwindigkeit ist, sich der windabgewandte Schwenkwinkel zwischen dem Luftauslasssonnendach (120) und dem Fahrzeugdach (210) verringert; während, wenn die detektierte Lufteinlassgeschwindigkeit größer als die festgelegte Lufteinlassgeschwindigkeit ist, sich der windabgewandte Schwenkwinkel zwischen dem Luftauslasssonnendach (120) und dem Fahrzeugdach (210) vergrößert.

12. Fahrzeugsteuerverfahren nach Anspruch 10, **dadurch gekennzeichnet, dass** der Luftführungsschritt S100 ferner Folgendes aufweist:
wenn ein detektierter Luftqualitätsparameter kleiner als ein festgelegter Luftqualitätsparameter ist, verringert sich der windzugewandte Schwenkwinkel zwischen dem Lufteinlasssonnendach (110) und dem Fahrzeugdach (210) oder bewegt sich in die geschlossene Lufteinlassposition (110a); und der windabgewandte Schwenkwinkel zwischen dem Luftauslasssonnendach (120) und dem Fahrzeugdach (210) verringert sich oder bewegt sich in die geschlossene Luftauslassposition (120a);
wenn der detektierte Luftqualitätsparameter größer als der festgelegte Luftqualitätsparameter ist, vergrößert sich der windzugewandte Schwenkwinkel zwischen dem Lufteinlasssonnendach (110) und dem Fahrzeugdach (210) oder bewegt sich in die offene Lufteinlassposition (110b); und der windabgewandte Schwenkwinkel zwischen dem Luftauslasssonnendach (120) und dem Fahrzeugdach (210) vergrößert sich oder bewegt sich in die offene Luftauslassposition (120b).

## Revendications

1. Système de toit ouvrant de véhicule (100), comprenant :
un toit ouvrant d'entrée d'air (110) disposé sur le toit d'une automobile (210) ; et
un toit ouvrant de sortie d'air (120) disposé en série sur un côté arrière du toit ouvrant d'entrée d'air (110) le long du toit de l'automobile (210),
dans lequel le toit ouvrant d'entrée d'air (110) a une position ouverte d'entrée d'air (110b) orientée vers une ouverture côté au vent et une position fermée d'entrée d'air (110a) qui est fermée par rapport au toit de l'automobile (210), et le toit ouvrant d'entrée d'air (110) est mobile entre la position ouverte d'entrée d'air (110b) et la position fermée d'entrée d'air (110a) ; tandis que le toit ouvrant de sortie d'air (120) a une position ouverte de sortie d'air (120b) orientée vers une ouverture côté sous le vent et une position fermée de sortie d'air (120a) qui est fermée par rapport au toit de l'automobile (210), et le toit ouvrant de sortie d'air (120) est mobile entre la position ouverte de sortie d'air (120b) et la position fermée de sortie d'air (120a), le toit ouvrant d'entrée d'air (110) est relié au toit ouvrant de sortie d'air (120) ; dans lequel pendant le processus selon lequel le toit ouvrant d'entrée d'air (110) se déplace de la position fermée d'entrée d'air (110a) à la position ouverte d'entrée d'air (110b), le toit ouvrant de sortie d'air (120) se déplace de la position fermée de sortie d'air (120a) à la position ouverte de sortie d'air (120b), **caractérisé en ce que** le toit ouvrant de sortie d'air (120) et le toit ouvrant d'entrée d'air (110) sont adjacents l'un à l'autre.

2. Système de toit ouvrant de véhicule (100) selon la revendication 1, **caractérisé en ce que** le toit ouvrant d'entrée d'air (110) et/ou le toit ouvrant de sortie d'air (120) pivotent par rapport au toit de l'automobile (210) .

3. Système de toit ouvrant de véhicule (100) selon la revendication 2, **caractérisé en ce qu'**un angle de pivotement au vent entre le toit ouvrant d'entrée d'air (110) et le toit de l'automobile (210) augmente lorsqu'une quantité d'entrée d'air est inférieure à une quantité d'entrée d'air définie ; et/ou un angle de pivotement sous le vent entre le toit ouvrant de sortie d'air (120) et le toit de l'automobile (210) diminue lorsqu'une vitesse d'entrée d'air détectée est inférieure à une vitesse d'entrée d'air définie.

4. Véhicule (200), **caractérisé en ce qu'**il comprend : le système de toit ouvrant de véhicule (100) selon l'une quelconque des revendications 1 à 3 ; et un dispositif de commande destiné à commander le mouvement du toit ouvrant d'entrée d'air (110) et/ou du toit ouvrant de sortie d'air (120).

5. Véhicule (200) selon la revendication 4, **caractérisé en ce qu'**il comprend en outre : un capteur d'entrée d'air destiné à détecter la vitesse d'entrée d'air et/ou la quantité d'entrée d'air ; et le dispositif de commande commande l'ouverture et la fermeture et les angles de pivotement du toit ouvrant d'entrée d'air (110) et/ou du toit ouvrant de sortie d'air (120) sur la base de la vitesse d'entrée d'air et/ou de la quantité d'entrée d'air détectées.

6. Véhicule (200) selon la revendication 4, **caractérisé en ce qu'**il comprend en outre un capteur de qualité de l'air destiné à détecter des paramètres de qualité de l'air ; et le dispositif de commande commande l'ouverture et la fermeture et les angles de pivotement du toit ouvrant d'entrée d'air (110) et/ou du toit ouvrant de sortie d'air (120) sur la base des paramètres de qualité de l'air détectés.

7. Véhicule (200) selon la revendication 4, **caractérisé en ce qu'**il comprend en outre : un conduit de guidage d'air (111) disposé en aval du toit ouvrant d'entrée d'air (110) destiné à diriger l'air entrant vers une position désignée à l'intérieur du véhicule (200).

8. Véhicule (200) selon la revendication 7, **caractérisé en ce qu'**il comprend en outre : une pale de guidage d'air (112) disposée au niveau d'une sortie du conduit de guidage d'air (111) destinée à régler une direction d'entrée d'air.

9. Véhicule (200) selon la revendication 4, **caractérisé en ce que** le toit ouvrant d'entrée d'air (110) est situé longitudinalement le long du véhicule (200) sur un côté avant d'une première rangée de sièges du véhicule (200) .

10. Procédé de commande de véhicule pour le véhicule (200) selon l'une quelconque des revendications 4 à 9, **caractérisé en ce que** le procédé comprend :
une étape de guidage d'air S100, à laquelle le toit ouvrant d'entrée d'air (110) se déplace de la position fermée d'entrée d'air (110a) à la position ouverte d'entrée d'air (110b), et le toit ouvrant de sortie d'air (120) se déplace de la position fermée de sortie d'air (120a) à la position ouverte de sortie d'air (120b) ;
une étape de fermeture S200, à laquelle le toit ouvrant d'entrée d'air (110) se déplace de la position ouverte de d'entrée d'air (110b) à la position fermée d'entrée d'air (110a), et le toit ouvrant de sortie d'air (120) se déplace de la position ouverte de sortie d'air (120b) à la position fermée de sortie d'air (120a).

11. Procédé de commande de véhicule selon la revendication 10, **caractérisé en ce que** l'étape de guidage d'air S100 comprend en outre :
S110, où lorsqu'une quantité d'entrée d'air détectée est inférieure à une quantité d'entrée d'air définie, l'angle de pivotement au vent entre le toit ouvrant d'entrée d'air (110) et le toit de l'automobile (210) augmente ; tandis que lorsque la quantité d'entrée d'air détectée est supérieure à la quantité d'entrée d'air définie, l'angle de pivotement au vent entre le toit ouvrant d'entrée d'air (110) et le toit de l'automobile (210) diminue ; et/ou
S120, lorsqu'une vitesse d'entrée d'air détectée est inférieure à une vitesse d'entrée d'air définie, l'angle de pivotement sous le vent entre le toit ouvrant de sortie d'air (120) et le toit de l'automobile (210) diminue ; tandis que lorsque la vitesse d'entrée d'air détectée est supérieure à la vitesse d'entrée d'air définie, l'angle de pivotement sous le vent entre le toit ouvrant de sortie d'air (120) et le toit de l'automobile (210) augmente.

12. Procédé de commande de véhicule selon la revendication 10, **caractérisé en ce que** l'étape de guidage d'air S100 comprend en outre :
lorsqu'un paramètre de qualité de l'air détecté est inférieur à un paramètre de qualité de l'air défini, l'angle de pivotement au vent entre le toit ouvrant d'entrée d'air (110) et le toit de l'automobile (210) diminue ou passe dans la position fermée d'entrée d'air (110a) ; et l'angle de pivotement sous le vent entre le toit ouvrant de sortie d'air (120) et le toit de l'automobile (210) diminue ou passe dans la position fermée de sortie d'air (120a) ;
lorsqu'un paramètre de qualité de l'air détecté est supérieur au paramètre de qualité de l'air défini, l'angle de pivotement au vent entre le toit ouvrant d'entrée d'air (110) et le toit de l'automobile (210) augmente ou passe dans la position ouverte d'entrée d'air (110b) ; et l'angle de pivotement sous le vent entre le toit ouvrant de sortie d'air (120) et le toit de l'automobile (210) augmente ou passe dans la position ouverte de sortie d'air (120b).
